# EUROPÄISCHE PATENTSCHRIFT

(11) **EP 3 645 873 B1**
(45) Veröffentlichungstag und Bekanntmachung des Hinweises auf die Patenterteilung: **22.03.2023**
(21) Anmeldenummer: 18740501.4
(22) Anmeldetag: 25.06.2018
(51) Int. Cl.: F03D 13/20, F03D 1/02

(54) **WINDPARK MIT GEGENSEITIG ABGESPANNTEN MASTEN**
WIND FARM WITH MUTUALLY BRACED MASTS
PARC ÉOLIEN COMPRENANT DES MÂTS ANCRÉS LES UNS AUX AUTRES

(30) Priorität: 27.06.2017 DE 102017006058
(43) Veröffentlichungstag der Anmeldung: 06.05.2020
(73) Patentinhaber: WAGNER, Philipp, 97618 Heustreu (DE)
(72) Erfinder: WAGNER, Philipp, 97618 Heustreu (DE)
(74) Vertreter: Prinz & Partner mbB
(86) Internationale Anmeldenummer: PCT/EP2018/000317
(87) Internationale Veröffentlichungsnummer: WO 2019/001765

(56) Entgegenhaltungen:
- GB-A- 2 425 328
- US-A1- 2014 103 665
- US-A1- 2015 308 139

## Beschreibung

Die Erfindung betrifft einen Raumwindpark und ein Verfahren zum Steuern von Turnbauwerken eines Raumwindparks.

Von Windflügeln angetriebene Generatoren, auch Windgeneratoren genannt, die zu mehreren an einem Mast angebracht sind, wurden in der Vergangenheit verschiedentlich vorgeschlagen und auch in kleineren und mittleren Maßstäben erprobt. Dabei werden im Wesentlichen zwei Bauweisen unterschieden: Zum einen gibt es vertikal eingespannte Kragträger, die sich baumartig oder sternförmig verzweigen, um mehrere Rotoren an den Endpunkten der "Äste" aufzunehmen. Zum anderen gibt es Stabstrukturen, bei denen Rotoren übereinander an einem einzelnen Mast angebracht sind. Auch wurden flexible und gelenkige Masten vorgeschlagen. Gelegentlich wurden Mischformen vorgeschlagen.

Es wurde ebenfalls vorgeschlagen, insbesondere Turmbauwerke mit mehreren Rotoren sowohl nebeneinander, als auch hintereinander aufzureihen, um auf diese Weise größere Mengen an Energie aus dem heranströmenden Wind zu ernten. Auch wurden gestapelte Anlagen und Anlagen mit vertikalachsigen Rotoren vorgeschlagen, um die Energie nicht in der Fläche, sondern in der Vertikalen zu ernten. Aufgrund der Größe dieser Bauwerke mit teilweise mehreren hundert Metern Höhe sei eine solche Bauweise sowohl im Bau, als auch im Betrieb nicht wirtschaftlich, so die Meinung der Fachwelt. Aufgrund extremer Biegemomente in der Turmstruktur infolge der Lasten von mehreren Windgeneratoren sei ein solches Bauwerk in seinen Dimensionen unwirtschaftlich. Es sei offensichtlich, so die Argumentation, dass im Vergleich zu nebeneinander angeordneten Windgeneratoren kein nennenswerter Vorteil zu erzielen sei, da solche Bauwerke insbesondere aufgrund der Höhe der Turmanlagen mit strukturellen Problemen behaftet seien, die man nicht kosteneffizient beantworten könne. Ein Windpark in der Fläche sei einer solchen vertikalen Lösung immer vorzuziehen, so die Meinung der Fachwelt.

Die DE202016008087U1 schlägt eine Anordnung von Wind- oder Wasserkraftwerken in Clustern, Arrays oder Flottillen vor - die Begriffe werden in der Offenlegung synonym verwendet. Insbesondere im Hinblick auf eine bessere Ausnutzung von Wasserkraftwerken durch optimierte Verankerungssysteme macht die Schrift, basierend auf vorher zitierter, älterer Patentliteratur, allgemeine Aussagen und schlägt eine Anordnung von Generatoreinheiten durch Verknüpfungen in sogenannten Minimalnetzen vor. Die Offenlegung bleibt in ihren Aussagen sehr allgemein und bietet keinen Ansatz für eine reale Umsetzung von verknüpften Energieerzeugungsanlagen, die sich kosteneffizienter bauen und betreiben lassen, als herkömmlich Wind- oder Wasserkraftwerke, die unabhängig voneinander aufgestellt werden und somit eine konventionelle Addition von Energieerzeugungsanlagen bilden. Vielmehr gewinnt der Fachmann wie bei allen vorangegangenen Vorschlägen erneut den Eindruck, dass erheblicher Mehraufwand für das Errichten und Betreiben von zusätzlichen verbindenden Tragstrukturen zwischen den Energieerzeugungsanlagen, über deren Größe und Komplexität der Autor keine Aussage trifft, erforderlich ist, was keinesfalls wirtschaftlich sein kann.

Allen bis dato gemachten Vorschlägen ist ähnlich, dass infolge der sehr großen auftretenden Kräfte, insbesondere bei Multimegawatterzeugungsanlagen, entsprechende Tragstrukturen sehr groß dimensioniert werden müssen, was sie unwirtschaftlich macht.

Wie der Bau und der Betrieb von großformatigen Windfarmen in dreidimensionalen Clustern und Arrays innovativ, effizient und optimiert vorgenommen werden kann, zeigt die vorliegende Erfindung in einer Verzahnung aus Struktur und Betrieb.

Aus der WO 2012/171578 A2 ist ein Offshore-Windpark bekannt, bei dem die einzelnen Türme schwimmen und zueinander über Seile verspannt sind, damit die Türme stehen. Am Rande des Windparks sind dann Seile am Boden verankert. Die Türme werden unterhalb ihres Generators und circa 40 Meter unterhalb der Wasseroberfläche miteinander verspannt.

In abgespanntes Turmbauwerk für eine Windkraftanlage beschreibt auch die US 2015/308139 A1.

Schließlich zeigt die GB 2425328 A eine Windkraftanlage mit zwei benachbarten Türmen, die zwischen sich einen horizontalen Balken tragen, auf dem mehrere Generatoren sitzen.

Ein anderer Windpark mit Spanngliedern ist aus US 2014103665 bekannt.

Die Erfindung beschreibt mit ihrem Hauptmerkmal kompakte gestapelte Bauweisen, die die Flächenintensität der Energieausbeute, also die Energieernte pro Flächeneinheit, im Vergleich zu herkömmlichen Windparks um ein Mehrfaches übertreffen.

Die Erfindung beschreibt mit einem weiteren Merkmal Sicherungsmechanismen, um die Anfälligkeit der sehr schlanken Tragstrukturen gegen Versagen und Totalversagen insbesondere durch mögliche ,Dominoeffekte' zu schützen.

Die Erfindung beschreibt mit einem weiteren Merkmal Verfahren zur Steuerung der Windgeneratoren zur Vermeidung von Lastspitzen in der Tragstruktur, um die Dimensionierung der tragenden Bauteile trotz der großen Gesamtdimensionen der gestapelten Bauweise durch den gezielten Abbau von Lastspitzen und der Vermeidung von sich fortpflanzenden Resonanzen schlank und effizient zu halten.

Aus aerodynamischer Sicht günstige Abstände der Turmbauwerke von Windgeneratoren zueinander werden üblicherweise mit dem 5 bis 6-fachen Rotordurchmesser angegeben, um die Verschattung durch nachläufige Wirbelschleppen von benachbarten Windgeneratoren gering zu halten. Durch diesen empfohlenen, wirtschaftlich günstigen, Abstand als Vielfaches des Rotordurchmessers in der Horizontalen und der daraus resultierenden notwendigen Höhe der Turmbauwerke in der Vertikalen, bestimmt durch eben diesen Rotordurchmesser, und der daraus im Weiteren folgenden Länge der erforderlichen Spannglieder zwischen den Turmbauwerken entsteht ein wirtschaftliches Optimum für mehrgeschossige verspannte Turmbauwerke mit mehreren Windgeneratoren übereinander, wenn die Ausführung wie in der Erfindung beschrieben, vorgenommen wird. Dieses Optimum behält seine Gültigkeit auch dann, wenn der Abstand der benachbarten Turmbauwerke sich - üblicherweise angegeben in Vielfachen des Rotordurchmessers des Windgenerators - sich auf das 1,5 fache vergrößert oder sich auf die Hälfte verkleinert.

Die Erfindung schlägt mit ihrem Hauptmerkmal insbesondere mehrgeschossige Konfigurationen vor, bei denen vorzugsweise genau drei Generatoren an einem Turm übereinander angeordnet sind. Auf diese Weise lässt sich die Energie des Windes drei Mal auf einer vorgegebenen Fläche ernten und gleichzeitig für das sehr hohe notwendige Turmbauwerk ein besonders effizientes strukturelles Optimum erzielen und nutzen, welches im Weiteren beschrieben wird.

Um ein Turmbauwerk, an dem mehrere, vorzugsweise drei, Windgeneratoren übereinander befestigt sind, in seiner Position zu halten, schlägt die Erfindung eine Turmkonstruktion in Form eines Stabes vor, der zwischen dem Generator an der Spitze des Turmbauwerkes und dem Generator darunter zusätzlich abgespannt wird. Die Fixierung geschieht durch Spannglieder. Insbesondere im Gegensatz zu der US5146096A ist das Turmbauwerk nicht durch gelenkige Abschnitte zusammengesetzt, sondern steif ausgebildet, um - wie im Weiteren beschrieben wird - die gewünschten Effekte von sehr geringen Durchbiegungen zu erzielen.

Erfindungsgemäß münden die Spannglieder, die jeweils zwischen dem obersten und zweitobersten Windgenerator am Turmbauwerk befestigt werden und vom jeweiligen Turmbauwerk fortführen, in den jeweiligen Fußbereich des Nachbarturmes, was teure und aufwendige Abspannfundamente, wie bei herkömmlichen abgespannten Windkrafttürmen, überflüssig macht. Die Turmbauwerke stehen in Anordnungen zueinander, bei denen das untere Ende der Spannglieder eines Turmbauwerkes jeweils in den Fußpunkt eines Nachbarturmes mündet und nur an den Rändern des Windparks freie Endabspannpunkte erforderlich sind. Da Spannglieder und Spannglied-Fundamente im Allgemeinen sehr teure Bauteile sind, schlägt die Erfindung vor, jedes Turmbauwerk nur in einem Höhenbereich abzuspannen. Diese geschieht insbesondere vorzugsweise zwischen dem obersten und zweitobersten Windgenerator eines Turmbauwerks. Die Spannglieder erstrecken sich jeweils genau in den Fußbereich des Nachbarturmes. Auf weitere Verspannungen mit Spanngliedern in mehreren Höhen des Turmbauwerkes wird vorzugsweise im Sinne der Erfindung verzichtet.

Die diagonal verlaufenden Spannglieder zwischen den Türmen sind jeweils in beide Richtungen ausgeführt, so dass in der Seitenansicht eine wechselseitige "Kreuzverspannung" entsteht.

Erfindungsgemäß sind die Spannglieder aus Sicherheitsgründen doppelt geführt.

Neben den Spanngliedern sieht die Erfindung zusätzlich eine horizontale Verspannung vor, die zusätzliche, redundante Sicherheit gegen den Ausfall der diagonalen Spannglieder bietet. Diese zusätzliche horizontale Verspannung erstreckt sich vorzugsweise zwischen den Turmbauwerken im Bereich der oberen Abspannpunkte am Turmbauwerk. Diese horizontalen Verspannungen entfalten ihre vorteilhafte Wirkung vor allem dann, wenn mehrere der diagonalen Spannglieder gleichzeitig ausfallen sollten. Durch das Vorhandensein der horizontalen Verspannung bewirkt das Versagen der diagonalen Spannglieder keinen "Dominoeffekt", bei dem benachbarte Turmbauwerke und die daran befestigten Windgeneratoren durch die einseitig ausfallende Zugkraft an dem betreffenden Turmbauwerk in einen instabilen Zustand geraten könnten, bei dem zuerst ein Turmbauwerk umfällt und dann weitere folgen. Diese Sicherheits-Spannglieder werden insbesondere vorgeschlagen, um die Anlagen in ihrer Gebrauchstauglichkeit erheblich besser gegen strukturelles Versagen oder Totalversagen (Dominoeffekt) abzusichern. Die Verbesserung der Gebrauchstauglichkeit ermöglicht eine leichtere Versicherung der Windparks gegen Schäden am Turmbauwerk und mögliches Versagen des Turmbauwerks. Die Spannglieder und die Sicherheitsspannglieder sind vorzugsweise in der Draufsicht tangential im Bereich der Wandungen der Turmbauwerke befestigt, um einen möglichst günstigen Lasteintrag der Zugkräfte in den Spanngliedern in die Turmwandung des Turmbauwerks zu garantieren.

In einer Variante der Erfindung sind die Spannglieder an einer ringförmige Aufweitung des Querschnitts des Turmbauwerks, z.B. an einer Plattform, befestigt.

Eine ringförmige Aufweitung des Querschnitts des Turmbauwerks ermöglicht einen gleichmäßigen Eintrag der ankommenden Kräfte der Spannglieder in die Mantelfläche des Turmbauwerks.

In einer Variante der Erfindung sind die Spannglieder und/oder die Sicherheits-Spannglieder in einer Schlaufenform um das Turmbauwerk geführt.

In einer Variante der Erfindung sind die Spannglieder und/oder die Sicherheits-Spannglieder in der Draufsicht mittig vor oder in dem Turmbauwerk befestigt und der Lasteintrag wird durch Lastverteilungselemente, z.B. Plattformen oder Querschnittsaufweitungen der Turmwandung, vorgenommen.

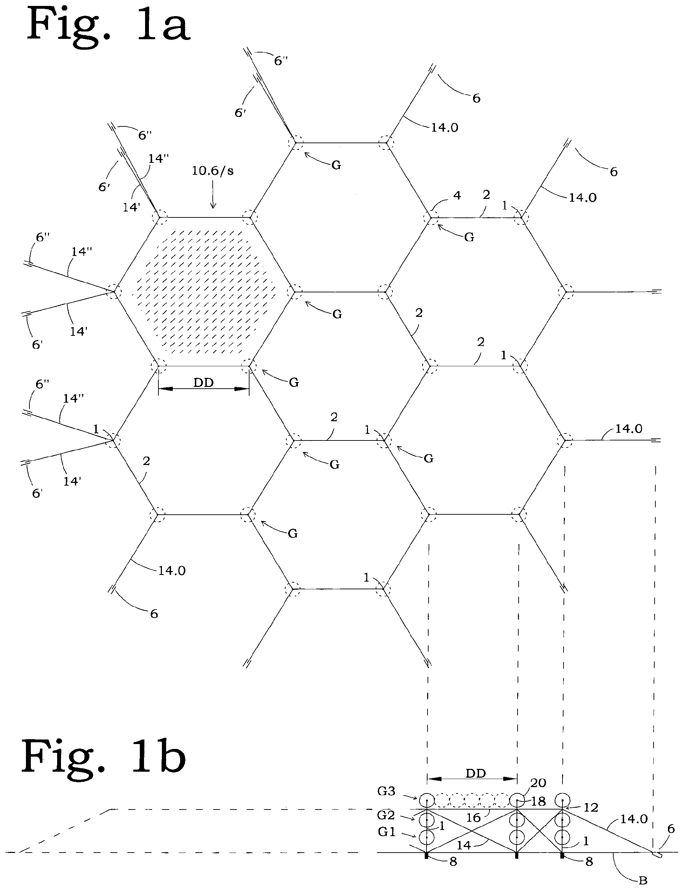

Durch die Anordnung der Turmbauwerke und der in der Seitenansicht gekreuzten diagonalen Spannglieder zwischen den Turmbauwerken werden Abspannfundamente in großer Zahl eingespart, was die Wirtschaftlichkeit einer solchen Konfiguration bereits merklich steigert. In den Figuren zeigt Abbildung 1 in einer schematischen Beispieldarstellung eine Anordnung mit vierundzwanzig Turmbauwerken und lediglich zwölf außen liegenden Abspannfundamenten anstelle von sonst zweiundsiebzig notwendigen Abspannfundamenten. Durch die Stapelung der Generatoren übereinander wird das Verhältnis nochmals verbessert, da im Falle von einzelnen abgespannten Windgeneratoren 216 Abspannfundamente notwendig wären.

Die Erfindung schlägt den Betrieb von vorzugsweise drei Windgeneratoren an einem Turmbauwerk vor: Sie sieht vor, die schräg verlaufenden Spannglieder nur zwischen der vom Boden gezählten vorletzten und letzten Ebene von Windgeneratoren am Turmbauwerk anzubringen. Die Erfindung zeigt, dass die Anordnung der am Turmbauwerk zwischen den beiden obersten Windgeneratoren befestigten Spannglieder dazu führt, dass der Windschub auf diese beiden Windgeneratoren und die daraus resultierenden Biegemomente im Turmbauwerk sich im Verspannungspunkt kumulieren und im Zuge der Auflagerreaktion der Spannglieder gegenseitig neutralisieren. Die Aufaddierung der gegenläufigen Biegemomente im Bereich des Verspannungspunktes hat zur Folge, dass die Auslenkung des Turmbauwerkes aus der Vertikalen trotz der großen Gesamthöhe sehr gering ausfällt. Die Deformation des Turmbauwerkes entspricht in ihrer ersten Eigenform durch die Anordnung des Abspannpunktes zwischen dem Windgenerator an der Spitze des Turmbauwerkes und dem Windgenerator darunter und dem Lasteintrag aller drei Windgeneratoren in das Turmbauwerk einer schwachen S-Kurve. Insofern kann das gesamte Turmbauwerk sehr schlank ausgebildet werden. Eine zusätzliche Verspannung zwischen dem ersten und dem zweiten Windgenerator ist nicht erforderlich, was mit *erheblicher* Kostenersparnis einhergeht. Die Anordnung verringert die Zahl notwendiger Spannglieder am Turmbauwerk. Günstigenfalls ist trotz der beachtlichen Gesamthöhe nur eine einzige Abspannebene erforderlich. Diese Abspannebene befindet sich, wie beschrieben, vorzugsweise zwischen dem Windgenerator an der Turmspitze und dem daruntergelegenen Windgenerator.

Die Erfindung zielt bildlich gesprochen darauf ab, dass die beiden oberen Windgeneratoren sich in Bezug auf den dazwischenliegenden Verspannungspunkt und die Reaktion des Turmbauwerkes ähnlich verhalten, wie zwei Waagschalen, deren Gewichte sich durch die mittige Lagerung des Waageholms der Waage bei etwa gleichen Lasten die Balance halten.

Die Erfindung zielt ferner darauf ab, dass die Einwirkung der oberen zwei Drittel des Turmbauwerkes auf das untere Drittel des Turmabschnittes zusammen mit dem bodenseitig angeordneten Windgenerator sich so gestaltet, dass über dem bodenseitig angeordneten Windgenerator mit dem unteren Turmabschnitt ein quasi-feststehendes Lager, bestehend aus dem oberen Turmabschnitt, angeordnet ist. Dieser Effekt verleiht dem unteren Abschnitt des Turmbauwerkes zusätzliche Stabilität. Der Effekt verringert zudem das Biegemoment im unteren Turmabschnitt und die veränderlichen Lasten und das Biegemoment, das auf den Turmfuß und das darunter angeordnete Turmfundament einwirkt, was entweder die Lebenszeit des Turmbauwerkes verlängert oder das Turmbauwerk, der Turmfuß und das Turmfundament kann schlanker ausgebildet werden.

Erfindungsgemäß wird das Turmbauwerk im unteren Bereich vorzugsweise als Stahlbetonkonstruktion ausgeführt. Vorzugsweise ist die Stahlbetonkonstruktion eine Spannbetonkonstruktion. Die vorteilhafte Wirkung einer solchen Konstruktion mit in der Regel über 300 Meter Höhe ist insbesondere ihre Biegesteifigkeit und ihre notwendige Torsionssteifigkeit.

Vorzugsweise wird das Turmbauwerk im oberen Bereich als Stahlrohrturm in Stahlbauweise ausgeführt. Vorzugsweise findet der Übergang von Stahlbetonbauweise zu Stahlbauweise im Bereich der oberen Abspannung statt, idealerweise knapp darüber. Die Bauweise aus leichten Stahlrohrsegmenten im oberen Turmbereich verringert das Gesamtgewicht und verbessert das Frequenzverhalten des Turmbauwerkes.

Erfindungsgemäß kann im Falle von Offshore-Anwendungen eine am unteren Ende des Turmbauwerkes angebrachte Gründungsstruktur vorzugsweise eine Composite-Stahlbetonkonstruktion sein. Diese ist preiswerter als GBFs (= Gravity based Foundations) und steifer als ein reiner Monopile aus Stahl. Vorzugsweise wird die Stahlröhre des Composites zunächst an die Aufstellposition verbracht. Erst an der Aufstellposition wird die Stahlröhre in den dafür vorgesehenen Abschnitten mit Beton verfüllt, um die erwünschte Steifigkeit zu erlangen. Die für den Composite-Verbund vorgesehenen Abschnitte der Stahlröhre müssen nicht die gesamte Länge der Stahlröhre bedeuten.

Um einen reibungslosen Betrieb der vorzugsweise drei Windgeneratoren zu ermöglichen, werden alle Windgeneratoren entlang des Turmes so gelagert, dass sie sich individuell drehen und nach dem Wind ausrichten lassen. Erfindungsgemäß kann auf diese Weise im Wartungsfall der defekte Windgenerator separat von den übrigen Windgeneratoren gedreht und gesteuert werden.

Erfindungsgemäß werden die Windgeneratoren entlang des Turmbauwerkes mit einer Vorrichtung verbunden, die drehbar um den Turmschaft des Turmbauwerkes gelagert ist. Die drehbare Lagerung der Vorrichtung erfolgt vorzugsweise durch ein Gleitlager.

Der im ersten Abschnitt beschriebene strukturelle Teil der Erfindung wird ergänzt durch ein Verfahren zur Regelung des Raumwindparks, erfindungsgemäß insbesondere verwirklicht durch die Installation von "Global-Controllern". Ein Controller ist üblicherweise eine Steuereinheit, die eine Windgenerator steuert. Sie errechnet den optimalen Betriebszustand aus Rotordrehzahl, Anstellwinkel der Rotorblätter, Ausrichtung zur Windrichtung, Windgeschwindigkeit und anderen Parametern. In der Regel steuert je ein Controller je einen Windgenerator. Im Zusammenhang mit der Erfindung kommen "Global-Controller" zum Einsatz, die nicht nur einzelne Generatoren steuern und regeln, sondern die den gesamten Raumwindpark als zusammenhängendes Gefüge oder Teile davon über das erfindungsgemäße Steuerungsverfahren steuern.

Erfindungsgemäß sind die Global-Controller insbesondere nicht nur dahingehend ausgelegt, den Parkwirkungsgrad einer einzelnen Ebene von Windgeneratoren oder aller Ebenen zu verbessern. Es ist Teil der Erfindung, das Steuerungsverfahren des Global-Controllers so auszuführen und zu programmieren, dass dieses Steuerungsverfahren in einem Verfahrensschritt aus den gesammelten Daten zum gemessenen Wind, zum Anlagenzustand und zur hinterlegten Parkstruktur die einzelnen Windgeneratoren zur Maximierung des Parkwirkungsgrades unterschiedlich ansteuert. Dies kann zum Beispiel geschehen, indem Windgeneratoren, auf die der Wind als erstes trifft, durch ihre Blattstellung dem Wind die Energie nur partiell entziehen und in Windrichtung in zweiter und dritter Reihe stehende Windgeneratoren dem Wind die verbliebene Energie entziehen. Dieses Steuerungsverfahren ist insbesondere bei extrem starkem Wind und Sturm vorteilhaft, denn der gesamte Park muß bei dieser extremen Witterung nicht, wie üblich, abgeschaltet werden, sondern er wird für den heranströmenden Wind beim Auftreffen auf die vordersten Windgeneratoren durch das Steuerungsverfahren des Global-Controllers "durchlässiger" geschaltet.

Der Global-Controller berücksichtigt und überwacht zusätzlich auch den tensegretischen Gesamtverbund des Raumwindparks aus seinen miteinander verknüpften Bauteilen, also den Turmbauwerken und den Spanngliedern und den eingebetteten Windgeneratoren berücksichtigt deren inhärente Interaktion. Inhärente Interaktionen sind beispielsweise das Schwingen des Turmbauwerkes infolge von Betriebslasten und die dadurch induzierte Straffung und Schwingung der Spannglieder. Durch das Anpassen der Betriebslasten durch das Steuerungsverfahren des Global-Controllers z. B. gemäß eines vorher programmiertes Optimums lassen sich ungewollte Schwingungen in den Spanngliedern und den Turmbauwerken und den daran befestigten Windgeneratoren vermeiden, dämpfen oder gezielt abbauen und somit Lastspitzen in den Spanngliedern und den Turmbauwerken und den Windgeneratoren über die Lebensdauer hin deutlich verringern. Übermäßige seitlich wirkende Lasten, zum Beispiel durch Sturm, lassen sich durch die Anpassung der Betriebszustände der Windgeneratoren z.B. im Teillastbetrieb hierdurch vermeiden.

Erfindungsgemäß wird die Interaktion der miteinander verknüpften tragenden Bauteile durch das Steuerungsverfahren des Global-Controllers auf diese Weise so beeinflusst, dass Lastspitzen in den tragenden Bauteilen und den Bauteilen der Windgeneratoren weniger häufig auftreten und dadurch vorzeitiger Materialermüdung der Tragstruktur und der Windgeneratoren vorgebeugt wird.

Erfindungsgemäß laufen die benachbarten Rotoren der Windgeneratoren an einem Turmbauwerk jeweils gegenläufig. Erfindungsgemäß laufen die Rotoren der Windgeneratoren des jeweils benachbarten Turmbauwerkes auf einer Ebene gegenläufig.

Erfindungsgemäß werden Messstellen, insbesondere auch Zustandssensoren wie Beschleunigungs- und Spannungssensoren dazu verwendet, ihre aufgenommenen Werte an den Global-Controller zu übermitteln. Durch die Verarbeitung der Eingangswerte der Messstellen, die verteilt über den gesamten Raumwindpark die Zustandsdaten des Gesamtgebildes, bestehend aus den Betriebsdaten der Windgeneratoren und den Zustandsdaten der Tragstruktur, an den Global-Controller übergeben, wird die Ausgabe von entsprechenden Stellinformationen berechnet, was mehrere Vorteile generiert: Die Windgeneratoren werden nicht nur wie ein loser Verband aus Einzelanlagen von einzelnen Controllern gesteuert, wie in einem herkömmlichen Windpark. Der Global-Controller wacht vielmehr über ein räumliches Gesamtgebilde auf zwei unterschiedlichen Ebenen. Die mehrschichtige Überwachung bezieht insbesondere das Wesen dieser Art der Anordnung und das Wesen dieser besonderen Tragstruktur ein:
Einerseits wacht der Global-Controller über eine räumliche Anordnung von Windgeneratoren in thermodynamischer Hinsicht. Hierbei wird die optimale Effizienz des Windfeldes mit den Windgeneratoren berechnet. Das Steuerungsverfahren des Global-Controllers berücksichtigt hierbei insbesondere auch solche thermodynamischen Effekte, die für ein dreidimensionales Windfeld charakteristisch sind. Das ist beispielsweise die spezifische Rekombination der Energie des Windes hinter den Rotoren. Diese ist bei den Windgeneratoren an der Spitze der Turmbauwerke unterschiedlich zu den mittigen Windgeneratoren und den unteren Windgeneratoren.

Zusätzlich spielt der Zustand des gesamten räumlichen Bauwerkes, also der Tragstruktur, eine neue Rolle. Hier ist insbesondere die tensegretische Struktur von großer Bedeutung, auf die das Steuerungsverfahren des Global-Controllers zur Beeinflussung des Gesamtgebildes eingeht.

Tensegretische Strukturen bestehen aus Druckstäben und Zugelementen. In solchen Gebilden ist die Weitergabe und Verteilung von Kräften und besonders von Schwingungen ein wesentliches Charakteristikum. Es ist eine ganz besondere Eigenschaft einer ebensolchen Struktur. Windgeneratoren sind wiederum Bauteile, die sehr starke Schwingungen induzieren und diese in die tensegretische Struktur abgeben. Lasten und Schwingungen von Windgeneratoren wirken im tensegretischen Verbund folglich nicht mehr nur auf ein einziges Turmbauwerk oder Spannglied, sondern sie werden weitergegeben. Lasten addieren sich und Schwingungen schaukeln sich ohne aktives Eingreifen auf. Das führt notgedrungen zu größeren Bauteilabmessungen. Es würde die ersehnten Vorteile einer effizienten Struktur wieder zunichtemachen. Es ist darum die Aufgabe insbesondere des Steuerungsverfahrens des Global-Controllers, Lastspitzen infolge der Weitergabe von Lasten innerhalb der Tragstruktur, sowie das Aufschaukeln von Schwingungen und deren Weitergabe innerhalb der Tragstruktur zu vermeiden. Es ist die Aufgabe insbesondere des Steuerungsverfahrens des Global-Controllers eine aktive Dämpfung herbeizuführen, indem beispielsweise entsprechende Steuersignale an individuelle oder mehrere oder alle Windgeneratoren geben werden, um deren Betriebszustände anzupassen. Durch das Abbauen von Lastspitzen durch angepasste Betriebszustände und/oder zusätzliche aktiv angesprochene Dämpfungselemente infolge des Steuerungsverfahrens des Global-Controllers verringert sich die Belastung, sowie die Ermüdungsbeanspruchung tragender Bauteile, so dass diese schlanker und effizienter dimensioniert werden können.

Die Erfindung betrifft ferner ein Verfahren zum Steuern der Last an den abgespannten Turmbauwerken eines Raumwindparks. Es ist die Aufgabe des Steuerungsverfahrens des Global-Controllers, die Verminderung von Lasten, Lastspitzen und Ermüdungsbeanspruchungen innerhalb des Raumwindparks durch die gezielte Steuerung von Windgeneratoren, insbesondere deren Eigenfrequenzverhalten, verursacht durch die unterschiedlichen Betriebszustände der Windgeneratoren, günstig zu beeinflussen: Die makroskopischen Strukturen des Raumwindparks unterliegen zahlreichen Schwingungsanregungen sowohl durch die windgeneratorinduzierten Frequenzen p und 3p der Rotoren, als auch der Bauteile selbst, z. B. Anregungen infolge der Turmeigenfrequenzen oder das Galopping der Spannglieder, oder das Schwingen der Spannglieder durch Windanregung. Die Erfindung sieht vor, dem Global-Controller insbesondere über Beschleunigungssensoren Zustandsdaten sowohl der tragenden Bauteile, als auch der Rotorblätter, als auch die Drehzahlen der Rotoren der Windgeneratoren zuzuführen. Der Global-Controller wird erfindungsgemäß so programmiert, dass in einem Verfahren Steuerungsbefehle an die Windgeneratoren abgegeben werden, bei denen die einzustellende Drehzahl und Leistung die Lastspitzen und Resonanzen innerhalb des Raumwindparks niedrig hält oder ganz vermeidet. Dies kann beispielsweise durch eine gezielt ungleiche Verteilung der Rotordrehzahlen aller Windgeneratoren geschehen. Dies kann durch chaotische oder quasichaotische Steuerung der Drehzahlen der Windgeneratoren durch den Global-Controller geschehen. Dies kann zusätzlich durch aktive Dämpfungselemente an bewegten oder unbewegten Bauteilen geschehen. Diese Dämpfungselemente können durch das Steuerungsverfahren des Global-Controllers angesprochen werden. Diese aktiven Dämpfungsmaßnahmen können zusätzlich durch strukturelle bauliche Maßnahmen mit passiver Dämpfungswirkung und durch passive Dämpfungselemente, unterstützt werden.

Erfindungsgemäß kann der Global-Controller auch Controller-Untereinheiten besitzen, die nicht oder nur teilweise miteinander vernetzt sind und einer hierarchischen oder einer vernetzten Struktur unterliegen können. Erfindungsgemäß handelt es sich bei der Steuerung eines Raumwindparks vorzugsweise um eine mehrstufiges Steuerungsverfahren. Die Steuerung besteht erfindungsgemäß aus einem Global-Controller oder mehreren Global-Controllern und lokalen Controllern. Auf diese Weise wird die erforderliche gesamte Rechenleistung für eine Vielzahl von Windgeneratoren mittels einer Art parallel-Computing-Architektur von einem Global-Controller oder mehreren Global-Controllern an lokale Controller, zuständig für je einen einzelnen Windgenerator oder eine kleine Gruppe von Windgeneratoren abgegeben. Die lokalen Controller übernehmen Teile der Steuerung.

Erfindungsgemäß kann jeder Windgenerator auch eine teilweise oder vollständig eigenständige Controller-Einheit aufweisen, die die Steuerung des jeweiligen Windgenerators insbesondere dann übernehmen kann, wenn der oder die übergeordneten Controller-Einheiten ausfallen oder abgeschaltet werden oder über längere Zeiträume im Regelbetrieb keine Steuerimpulse geben. Auf diese Weise ist der sichere Betrieb oder Weiterbetrieb der Windgeneratoren gewährleistet, auch wenn der oder die übergeordneten Controller-Einheiten nicht in Betrieb oder Standby sind. Dies dient auch zur redundanten Sicherheit.

Erfindungsgemäß können einzelne Windgeneratoren, die übereinander angebracht sind, zu Wartungs- und Reparaturzwecken abgeschaltet werden. Hebewerkzeuge können im Bereich jedes Windgenerators befestigt und betrieben werden.

Erfindungsgemäß sind die Spannglieder in jede Richtung doppelt ausgeführt, um die Ausfallsicherheit zu erhöhen. Sie sind zudem mit Verbindungselementen an den Kreuzungspunkten versehen, um die Schwingungsempfindlichkeit der Spannglieder durch Verkürzen der schwingungsfähigen Bauteillänge der Spannglieder herabzusetzen. Die Spannglieder können zusätzlich mit passiven oder aktiven Schwingungsdämpfern ausgestattet sein.

Erfindungsgemäß können zusätzliche Verbindungselemente zwischen den Spanngliedern oder zwischen den Spanngliedern und dem Turmbauwerk oder zwischen den Spanngliedern und dem Boden an weiteren Teilungspunkten entlang der Strecke der Spannglieder angebracht sein, um die freie schwingungsfähige Bauteillänge des Spanngliedes weiter zu reduzieren. Die Anbringung von weiteren Verbindungselementen unterdrückt mögliche Schwingungen oder Galopping der Spannglieder und verbessert die dissipative und passive Dämpfung von Schwingungen in den Spanngliedern.

Erfindungsgemäß können Dämpfungselemente, angebracht zwischen den Windgeneratoren und den Turmbauwerken, mögliche Lastspitzen und Schwingungsanregungen zwischen den Turmbauwerken und den Generatoren zusätzlich reduzieren. Diese Dämpfungselemente können beispielsweise konstruktive Zusätze in den Verbindungselementen zwischen den Windgeneratoren und den Turmbauwerken sein. Diese können beispielsweise schlittenartige oder schlingerförmige Relativbewegungen zulassen.

Erfindungsgemäß können die Spannglieder zwischen den Turmbauwerken zusätzlich mit Sicherungsmitteln, z.B. losen Fangleinen, ausgestattet sein, um im Falle eines Versagens festgehalten zu werden und nicht in die rotierenden Bauteile der Windgeneratoren zu stürzen oder andere Bauteile durch Zurückschnellen und Anprall zu schädigen.

Erfindungsgemäß kann das Turmbauwerk in Teilen oder vollständig aus Beton bestehen. Das Turmbauwerk wird vorzugsweise in Gleitbetontechnik hergestellt. Das Turmbauwerk kann in unterschiedlichen Höhen unterschiedliche Durchmesser aufweisen. Das Turmbauwerk kann in unterschiedlichen Höhen unterschiedliche Wandungsstärken aufweisen. Das Turmbauwerk kann in unterschiedlichen Höhen aus unterschiedlichen Betonsorten hergestellt sein. Das Turmbauwerk kann in unterschiedlichen Höhen unterschiedliche Grade der Vorspannung durch im Turmbauwerk angebrachte Zugglieder aufweisen. Das Turmbauwerk kann in unterschiedlichen Höhen unterschiedlich bewehrt sein. Diese Maßnahmen dienen einzeln oder beliebig kombinierbar insbesondere der strukturellen Schwingungsdämpfung. Das Turmbauwerk kann in unterschiedlichen Höhen zur Überwachung des Bauwerkszustandes mit Messsonden ausgerüstet sein. Diese Messsonden können in den Betonquerschnitt eingelassen sein.

Im Falle eines Raumwindparks offshore wirkt sich die Gesamtkonfiguration der Tragstruktur mit sehr hohen und schweren und kippsicheren Turmbauwerken erfindungsgemäß dahingehend vorteilhaft aus, dass für das Aufstellen der Turmbauwerke auf dem Meeresboden lediglich preisgünstige Monopiles notwendig sind. Monopiles sind bei herkömmlichen Windkraftanlagen offshore nur bis zu mittleren Wassertiefen gebräuchlich. Größere Biegemomente und stärkere Wellenkraft in größeren Wassertiefen können mit Monopiles nicht mehr wirtschaftlich realisiert werden. Durch die erfindungsgemäße Kombination von schweren Turmbauwerken mit hohen Normalkräften und dazwischenliegenden Verspannungen wir der Einsatz von preisgünstigen Monopiles auch bei größeren Wassertiefen möglich, denn durch die Erfindung wird das Kippmoment der Turmbauwerke auch unter Last auf sehr geringe Werte reduziert.

Erfindungsgemäß können die Spannglieder, die von der Mitte des Windparks in der Draufsicht gesehen am Rand des Windparks nach außen wegführen und den Windpark zur Seite hin verankern, in divergierende Richtungen verlaufen. Insbesondere bei Windparks offshore wird dadurch sichergestellt, dass im Falle einer Kollision mit einem Schiff oder mit Treibgut das Versagen des äußersten Spanngliedes, das durch die Wasseroberfläche zum Meeresboden führt, nicht das Versagen der gesamten Tragstruktur durch den Ausfall der notwendigen Zugkraft an einem Punkt nach sich zieht.

Erfindungsgemäß sind alle vorgenannten Maßnahmen frei kombinierbar.

Weitere Merkmale und Vorteile der Erfindung ergeben sich aus der nachfolgenden Beschreibung der bevorzugten Ausführungsformen unter Bezugnahme auf die Zeichnungen. In diesen zeigen:
- Figur 1a zeigt einen erfindungsgemäßen Windpark, bzw. einen Raumwindpark schematisch in der Draufsicht und die Figur 1b den Windpark in einem Abschnitt schematisch in der Ansicht. 1 zeigt symbolisch ein Turmbauwerk innerhalb des Raumwindparks, 2 zeigt symbolisch den Verlauf der kreuzweise verlaufenden Spannglieder 14 und der Sicherungs-Spannglieder 16 aus den Figuren 1b, 5, 6 und 7 zwischen den Turmbauwerken 1. Der Kreis 4 beschreibt die von den Rotorspitzen der Windgeneratoren G in der Draufsicht erreichte maximale Reichweite der Blattspitzen in allen Richtungen qualitativ. 10.6/s beschreibt eine symmetrische sechseckige Zelle innerhalb des hier dargestellten Raumwindparks. Die Turmbauwerke stehen mindestens im empfohlenen Abstand von 6 Rotordurchmessern DD (siehe auch Fig. 1b). Es werden in der dargestellten Zelle 10.6/s insgesamt vorzugsweise achtzehn Generatoren betrieben. Der Ertrag verdreifacht sich im Vergleich zu einem herkömmlichen Windpark in nur einer Ebene mit sechs Windgeneratoren, welcher sich nur in der Fläche erstreckt. Gemäß der Erfindung wird bereits in diesem skizzierten schematischen Beispiel deutlich, dass die Effizienz solcher Anordnungen herkömmlichen Windparks weit überlegen ist. Die Leistung pro Fläche verdreifacht sich. Lediglich zwölf äußere Abspannfundamente und vierundzwanzig Turmbauwerke sind notwendig, um insgesamt zweiundsiebzig Windgeneratoren auf einer geringen Fläche bei entsprechend geringer Pacht und geringeren, für den Betrieb eines Windparks notwendigen, Infrastrukturmaßnahmen, zu betreiben.

Da die in der Draufsicht randseitigen Spannglieder 14.0, die in das Abspannfundament 6 münden, nur als einzelnes, vorzugsweise doppelsträngiges Spannglied, ausgebildet sind und randseitig keine Sicherungs-Spannglieder 16, wie zwischen den Turmbauwerken 1, vorhanden sind, wie in Fig. 1b gezeigt, kann das Abspannfundament 6 in zwei benachbarte Abspannfundamente 6' und 6" aufgeteilt sein. Diese Aufteilung stellt sicher, dass im Falle des Versagens eines der beiden nach außen führenden vorzugsweise doppelsträngig ausgeführten Spannglieder 14' und 14" die Gesamtstruktur nicht versagt. Der Baugrund B kann im Falle von Offshore-Bauweisen auch Meeresgrund sein.

Figur 1b zeigt den mehrgeschossigen Windpark schematisch in einem Abschnitt von der Seite. Die Windgeneratoren G1 bis G3 sind jeweils an den Turmbauwerken 1 übereinander angeordnet. Die Turmbauwerke 1 stehen vorzugsweise im Abstand DD von fünf bis sechs Rotordurchmessern 20. Das Kreuz 18 in der Mitte des Rotorkreises 20 symbolisiert die Position des Generators. Der mehrgeschossige Raumwindpark ist über Spannglieder 14 kreuzweise wechselseitig verspannt. Er ruht auf Fundamenten 8 und ist an seinen Rändern seitlich durch Abspannfundamente 6 im Baugrund B verankert. Die Fundamente 8 können im Falle von Offshore-Bauweisen auch Offshore-Gründungsbauwerke sein. Die Sicherungs-Spannglieder 16 beschreiben horizontale Zugglieder, die im Vergleich zu den diagonalen Spanngliedern 14 vorzugsweise weniger Tragkraft aufweisen und vornehmlich zur Sicherheit des gesamten Windparks dienen. Sie übernehmen einen Teil der Tragkraft der diagonalen Spannglieder 14 für den Fall, dass diese ausfallen und verhindern ein seitliches Umkippen des Turmbauwerks 1, das von dem Ausfall des diagonalen Spanngliedes 14 betroffen ist.

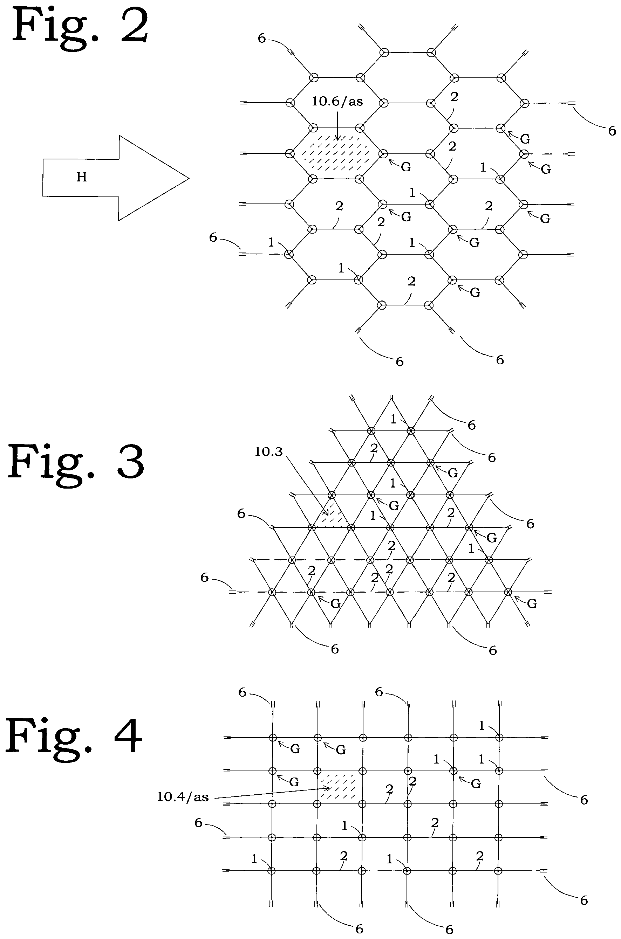

Die Figuren 2 bis 4 zeigen schematisch unterschiedliche mögliche Anordnungen der Turmbauwerke 1 und den Verlauf 2 der zwischen den Turmbauwerken 1 angeordneten Spannglieder 14 und Sicherungs-Spannglieder 16, wobei die Figur 2 eine sechseckige Anordnung zeigt, die nach einer Hauptwindrichtung H ausgerichtet ist. Die Zelle 10.6/as ist dementsprechend asymmetrisch ausgebildet. Figur 3 zeigt ein Windfeld, bei dem der Verlauf 2 der Spannglieder 14 und der Sicherungsspannglieder 16 in sechs Richtungen von den Turmbauwerken 1 weglaufen. Es entstehen Zellen 10.3 die in der Draufsicht durch den Verlauf 2 aller Spannglieder eine dreieckige Struktur aufweisen. Diese Anordnung erhöht die Redundanz gegen den Ausfall von Spanngliedern zusätzlich. In Figur 4 ist das gleiche Prinzip für eine rechteckige Anordnung der Verspannung schematisch dargestellt.

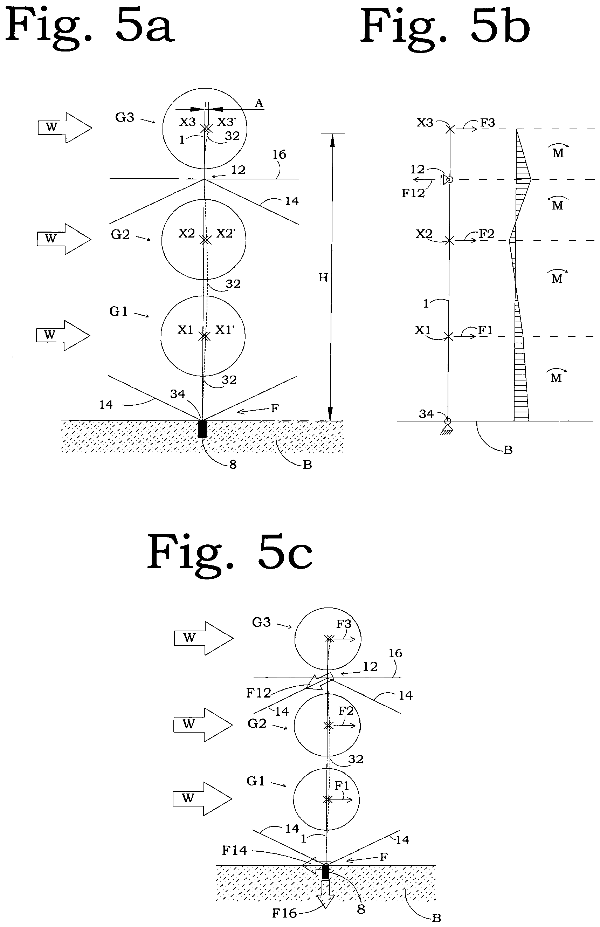

Die Figuren 5a und 5b zeigen am Beispiel eines einzelnen Turmbauwerkes 1 das erfindungsgemäße Prinzip aus der Nähe: Die Abspannung 12 am Turmbauwerk 1 mittels der Spannglieder 14 erfolgt zwischen den beiden oberen Windgeneratoren G2 und G3. Eine Abspannung oberhalb des unteren Windgenerators G1 ist erfindungsgemäß nicht erforderlich. Die gestrichelte Linie 32 beschreibt qualitativ die Verformung des Turmbauwerkes 1 infolge der seitlichen Windbeanspruchung W. Durch die Fixierung des Turmbauwerkes 1 im Abspannpunkt 12, wird die seitliche Verformung 32 des Turmbauwerkes 1 reduziert und die übereinander angeordneten Generatoren G1 bis G3 werden aus Ihrer Ruheposition X1 - X3 nur sehr gering nach X1' - X3' ausgelenkt. Dies ist trotz der großen Gesamthöhe H möglich, da die seitlichen Schubkräfte F2 und F3 der Windgeneratoren G2 und G3, infolge der Windbeanspruchung W, übertragen auf das Turmbauwerk 1, durch die Lagerung des Turmbauwerkes 1 im oberen Abspannpunkt 12 mit der Auflagerreaktion F12 gegenläufige Momente M hervorruft, die die maximale Auslenkung A der Turmspitze von X3 nach X3' gering halten. Die Auslenkung A bewegt sich trotz der großen Höhe im Bereich von Tausendstel Bruchteilen der Höhe H des gesamten Turmbauwerkes 1. Beispielsweise lenkt ein Turmbauwerk von 450 Metern Höhe und einer Schlankheit von vierzig bei voller seitlicher Windlast nur 50 Zentimeter aus. Diese sehr geringe Auslenkung A ist äußerst vorteilhaft für den gleichmäßigen und sicheren Betrieb auch von Windgeneratoren G in sehr großen Höhen H. Dieser Fakt widerspricht der Meinung der Fachwelt, dass gestapelte Generatoren mit sehr großen Gesamthöhen in Raumwindparks angeblich nicht sicher und nicht wirtschaftlich betrieben werden könnten. Das Spannglied 14 mündet im Bereich des Nachbarturmes in den Turmfußbereich F und benötigt somit nur an den Außenrändern des Windparks ein Abspannfundament 6 (siehe Fig. 1-4 und 6) oder geteilte Abspannfundamente 6' und 6" (siehe Fig. 1a)

Figur 5c veranschaulicht nochmals das Prinzip der sich aufhebenden gegenläufigen Biegemomente. Die durch den Wind W an den Generatoren G1 - G3 hervorgerufenen seitlichen Kräfte F1 - F3 werden an das Turmbauwerk 1 abgegeben. Durch die Auflagerreaktion im Abspannpunkt 12 wird ein Teil F12 der Kraft in das Spannglied 14 abgegeben und weitere Teile als Kräfte F14 und F16 in Form von Auflagerreaktion im Turmfußbereich F in das Fundament 8 übertragen. Das beanspruchte Spannglied 14 gibt die eingeleitete Kraft an einen Turmfußbereich F, bzw. den Fußpunkt 34, bzw. an eine Gründungsstruktur im Falle von Offshore-Bauweisen (nicht dargestellt) eines benachbarten Turmbauwerkes oder an ein Außenfundament 6 (siehe Figur 1b) ab. Auf diese Weise werden alle Kräfte sicher in den Baugrund B abgeleitet. Das Sicherungs-Spannglied 16 überträgt vorzugsweise nur unwesentliche Teile der auftretenden Kräfte zwischen zwei benachbarten Turmbauwerken 1. Das Sicherungs-Spannglied 16 ist hauptsächlich für den Fall vorgesehen, wenn das Spannglied 14 ganz ausfallen sollte, um das von dem Ausfall betroffene Turmbauwerk 1 in Position zu halten und weiteren Schaden zu vermeiden. Die Grafik in Fig. 5b zeigt den Momentverlauf innerhalb des Turmbauwerkes qualitativ in einer schematischen Darstellung.

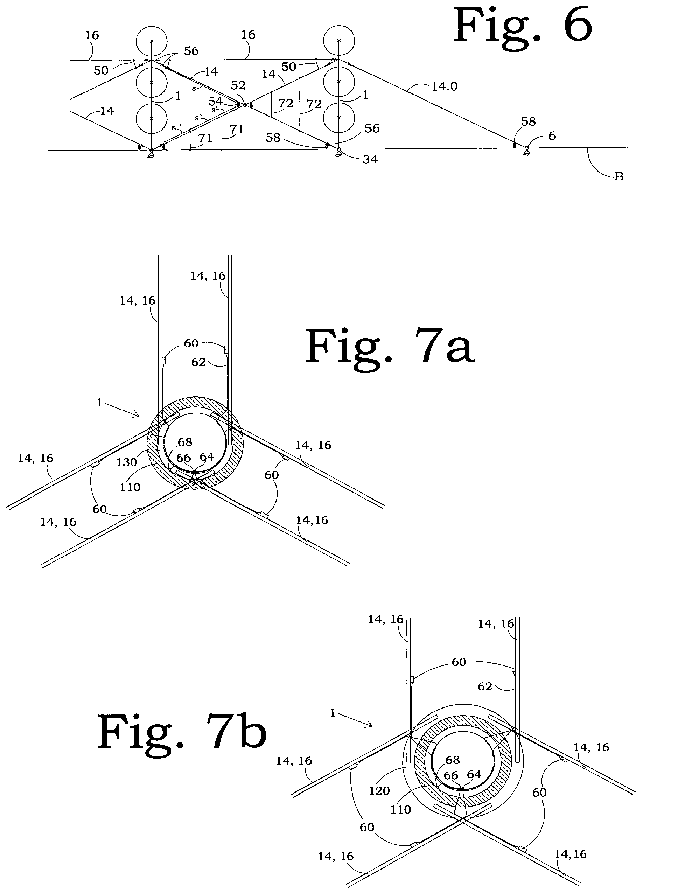

Die Figur 6 zeigt in schematischer Weise das Prinzip der Weitergaben von Lasten und insbesondere Schwingungen in einem Ansichtsausschnitt. Insbesondere Schwingungen der Spannglieder 14 und der Sicherheits-Spannglieder 16 können durch aktive und/oder passive Dämpfungselemente in Richtung des Spanngliedes, symbolisch durch die Federsymbole 56 wiedergegeben, reduziert werden. Darüber hinaus können zusätzlich aktive und/oder passive Dämpfungselemente 54 oder 58 quer zum Verlauf des Spanngliedes angebracht werden. Im Bereich der Kreuzung der Spannglieder 14 ist eine Verknüpfung 52 vorgesehen, um Galopping und Oberschwingungen in den Spanngliedern 14 zu vermeiden. Zusätzlich können die Spannglieder 14 und Sicherheits-Spannglieder 16, die Turmbauwerke 1 und der Boden B durch weitere Verknüpfungselemente 71 und 72 verbunden werden. Die freie schwingende Länge s beispielsweise des Spanngliedes 14, wird dadurch in Längensegmente zu s', s" und s‴ unterteilt. Die Anregungsempfindlichkeit des Spanngliedes 14 verringert sich dadurch. Die Sicherungselemente 50 zeigen symbolisch beispielsweise Fangleinen, die zusätzlich installiert sein können, um im Versagensfall eines Spanngliedes 14 oder eines Sicherungs-Spanngliedes 16 Schaden durch das Zurückschnellen des betroffenen Spanngliedes zu verhindern.

Figur 7a zeigt in einem Detail einen schematischen Schnitt durch ein Turmbauwerk 1, an dem die Spannglieder 14 und/oder die Sicherheits-Spannglieder 16 vorzugsweise doppelgeführt tangential befestiget im Inneren des Turmbauwerkes 1 sind. 110 beschreibt die Turmschale symbolisch. 130 beschreibt symbolisch eine Querschnittsaufweitung der Turmschale nach innen. Sensoren 60 überwachen das Schwingungsverhalten der Spannglieder. Der schematische Sensor 68 überwacht die Beschleunigung des Turmbauwerkes 1 in diesem Abschnitt. Alle Daten werden vorzugsweise über Datenkabel 62 und 64 gesammelt und zur Weiterverarbeitung an übergeordnete Verarbeitungseinheiten, die lokalen und globalen Controller (nicht dargestellt) geschickt. Optional können Sensoren mit Funk-Funktion zum Einsatz kommen. Figur 7a zeigt darüber hinaus, dass alle Spannglieder 14 und Sicherheits-Spannglieder 16 aus Sicherheitsgründen vorzugsweise doppelsträngig ausgeführt sind.

Figur 7b zeigt die gleiche Situation eines schematischen Schnittes durch ein Turmbauwerk 1, an dem die Spannglieder 14 und/oder die Sicherheits-Spannglieder 16 vorzugsweise doppelgeführt tangential außerhalb der Turmschale 110 des Turmbauwerkes 1 befestigt sind. Hierzu kann das Turmbauwerk 1 eine Aufweitung z.B. in Form einer Plattform 120 aufweisen. Erfindungsgemäß sind Mischformen aus Figur 7a und 7b möglich.

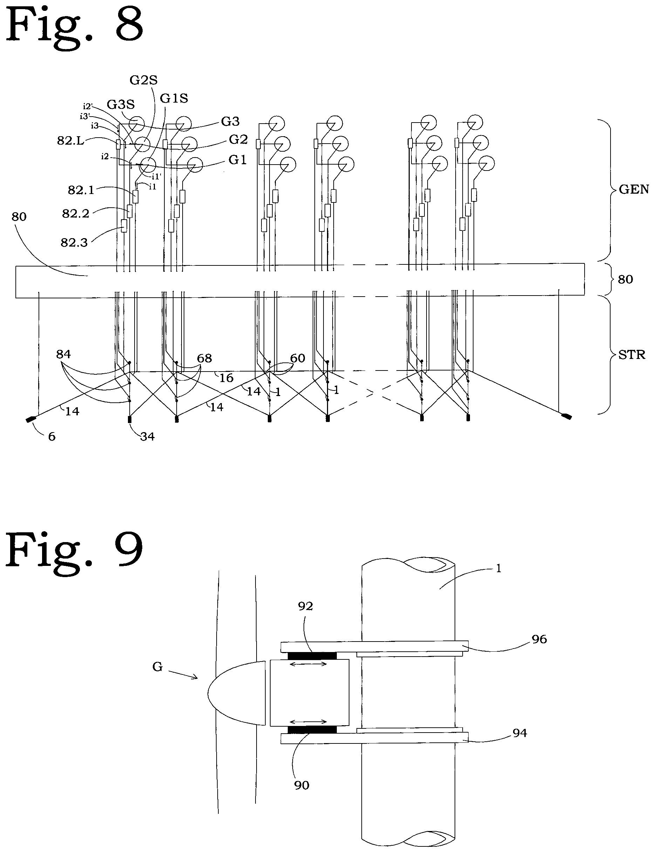

Figur 8 zeigt schematisch in einem Diagramm das Verfahren der Wirkweise des Global-Controllers 80. Zunächst übergeben die Sensoren G1S, G2S, G3S, symbolisch in Form von Kreisen dargestellt, der jeweiligen Windgeneratoren G1, G2, G3 (ebenfalls nur symbolisch dargestellt) die Zustandsdaten i1, i2, i3 der Windgeneratoren G1, G2, G3 an jeweilige einzelne Controller 82.1, 82.2 und 82.3. Zusätzlich und optional übergeben die Sensoren Daten i1', i2', i3` an einen lokalen Controller 82.L. Die einzelnen Controller 82.1, 82.2 und 82.3. sammeln und verarbeiten die eintreffenden Daten i1, i2, i3 einzeln und steuern damit die Windgeneratoren G1, G2, G3 einzeln. Die lokalen Controller 82.L sammeln und verarbeiten die eintreffenden Daten i1', i2', i3' (und ggfs die Daten weiterer Sensoren von weiteren Windgeneratoren) gemeinsam und steuern die Windgeneratoren G1, G2, G3 (und ggfs. weitere Windgeneratoren) gemeinsam. Ein Teil dieser Daten oder alle Daten werden zudem an den oder die Global-Controller 80 weiter übergeben. Diese Daten sind zusammengefasst die Generator-Daten GEN. Der Global-Controller 80 erhält darüber hinaus auch Strukturdaten STR aus dem Bauwerk und seinen Bauwerkskomponenten. Hierzu überwachen Sensoren 84, vornehmlich Beschleunigungssensoren, das Verhalten im Bereich der Generatoren und überwachen die Zustände der Spannglieder 14 und Sicherungs-Spannglieder 16 durch weitere Sensoren 60 und 68, ebenfalls vorzugsweise Beschleunigungssensoren oder auch Spannungssensoren. 60 sind symbolisch Beschleunigungs- und/oder Spannungssensoren der Spannglieder 14 und 16, 68 sind symbolisch Beschleunigungs- und/oder Spannungssensoren der Turmbauwerke 1, Diese Daten werden ebenfalls an den oder die Global-Controller 80 übermittelt. Der oder die Global-Controller 80 errechnen sodann in einem Verfahren aus den Daten GEN und den Daten STR fortlaufend den günstigsten optimalen Betriebszustand, bei dem beispielsweise bestimmte Generatoren mit bestimmten Rotordrehzahlen arbeiten und andere Generatoren mit anderen Rotordrehzahlen. Auf diese Weise wird der Raumwindpark über das Ansteuerverfahren des oder der Global-Controllers 80 zu jeder Zeit nicht nur möglichst homogen ausgelastet, sondern der oder die Global-Controller 80 vermeiden Resonanzen oder Lastspitzen durch ungünstige Betriebszustände mit sich aufaddierenden Resonanzen und Lasten im gesamten räumlichen Gebilde. Letzteres ist erfindungsgemäß von großer Bedeutung, da die über den gesamten Raumwindpark hin im Verbund wirkenden Tragelemente durch ihre Verbindung insbesondere Schwingungen in einem solchen System fortpflanzen und darum ein Verfahren der fortlaufenden Überwachung und Anpassungen des gesamten Systems erfordern, um diese Schwingungen und ihre Fortpflanzung möglichst zu unterdrücken und zu vermeiden, um möglichst langlebig und verschleißarm zu betrieben werden zu können.

Nicht dargestellt in Figur 8 ist, daß Strukturdaten STR auch an lokale Controller 82.L oder einzelne Controller 82.1, 82.2, 82.3 direkt weitergegeben werden können.

Figur 9 zeigt schematisch eine mögliche Anordnung von Dämpfungselementen zwischen Generator G und Turmbauwerk 1, um die Schwingungen des Turmbauwerkes 1 und des Generators G voneinander zu entkoppeln und diese zu dämpfen. Hierzu werden vorzugsweise Lagerelemente 90 und 92 zwischen dem Generator G und den Verbindungselementen 94 und 96 zum Turmbauwerk vorgesehen. Die Erfindung sieht vor, dass der Generator G entweder auf einem Verbindungselement 94 ruhen kann, von einem Verbindungselement 96 herabhängen kann oder von Verbindungselementen 94 und 96 eingefasst, auch seitlich eingefasst, sein kann, was erfindungsgemäß die Übertragung der Kräfte vom Generator G in das Turmbauwerk 1 verbessert. Die Dämpfungselemente 90 und 92, sowie die Verbindungselemente 94 und 96, sind frei kombinierbar. Die Verbindungselemente 94 und 96 können auch vom Generator G gefasst oder umschlossen sein. Die Lagerelemente 90 und 92 können sich beispielsweise schlittenartig bewegen. Das Verbindungselement 94 ist drehbar um das Turmbauwerk gelagert. Das Verbindungselement 96 ist drehbar um das Turmbauwerk gelagert. Die Dämpfungselemente 90 und 92, sowie die Verbindungselemente 94 und 96 können Teile des Maschinenrahmens des Windgenerators sein.

## Patentansprüche

1. Raumwindpark, bestehend aus mehreren Turmbauwerken (1), die mehrere übereinander angeordnete Windgeneratoren (G) tragen und die durch Spannglieder (14), die seitlich vom Turmbauwerk (1) wegführen, seitlich verspannt sind, **dadurch gekennzeichnet, dass**
die Spannglieder (14), die zwischen den Turmbauwerken (1) verlaufen, jeweils im Turmfußbereich (F) des Nachbarturmbauwerkes bodenseitig gehaltert sind.

2. Raumwindpark nach Anspruch 1, **dadurch gekennzeichnet, dass** vorzugsweise drei Windgeneratoren (G1 bis G3) mit eigenen, zugeordneten Windflügeln übereinander angeordnet sind.

3. Raumwindpark nach einem der oberen Ansprüche, **dadurch gekennzeichnet, dass** die Spannglieder (14) mit einem Ende im oberen Bereich des Turmbauwerkes (1) zwischen dem zweitobersten Windgenerator (G2) und dem obersten Windgenerator (G3) am Turmbauwerk (1) befestigt sind.

4. Raumwindpark nach einem der oberen Ansprüche, **dadurch gekennzeichnet, dass** die Spannglieder (14) mit einem Ende im Turmfußbereich (F) des Turmbauwerkes (1) befestigt sind, wobei der Turmfußbereich (F) auch eine Gründungsstruktur für Offshore-Bauweisen beinhalten kann, und/oder dass die Spannglieder (14) zumindest zwischen zwei Turmbauwerken (1) in jeder Spannrichtungen doppelt ausgeführt sind.

5. Raumwindpark nach einem der oberen Ansprüche, **dadurch gekennzeichnet, dass** zusätzliche Sicherungs-Spannglieder (16) zwischen dem zweitobersten Windgenerator (G2) und dem obersten Windgenerator (G3) an jeweils benachbarten Turmbauwerken (1) befestigt sind.

6. Raumwindpark nach einem der oberen Ansprüche, **dadurch gekennzeichnet, dass** Dämpfungselemente (90) und (92) entweder gemeinsam oder einzeln zwischen dem Windgenerator (G) und dem Turmbauwerk (1) angebracht sind, insbesondere dass Verbindungselemente (94) und (96) zwischen dem Windgenerator (G) und dem Turmbauwerk (1) angebracht sind, durch die der Windgenerator (G) drehbar um das Turmbauwerk (1) gelagert wird.

7. Raumwindpark nach Anspruch 6, **dadurch gekennzeichnet, dass** Verbindungselemente (94) und (96) und die Dämpfungselemente (90) und (92) Teil des Maschinenrahmens des Windgenerators (G) sind.

8. Raumwindpark nach einem der oberen Ansprüche, **dadurch gekennzeichnet, dass** der Turmabschnitt oberhalb des Bereiches des Abspannpunktes (12) in einer leichteren Bauweise hergestellt ist, als der darunterliegende.

9. Raumwindpark nach einem der oberen Ansprüche, **dadurch gekennzeichnet, dass** das Turmbauwerk (1) im Bereich der Befestigungsvorrichtung für das Hebemittel Verstärkungen in der Turmwandung aufweist.

10. Raumwindpark nach einem der oberen Ansprüche, **dadurch gekennzeichnet, dass** im Randbereich des Raumwindparks sich die äußeren Spannglieder in zwei divergierende Spannglieder (14') und (14") aufteilen und in Abspannfundamenten (6') und (6") am Boden befestigt werden.

11. Raumwindpark nach einem der oberen Ansprüche, **dadurch gekennzeichnet, dass** die jeweils benachbarten Windgeneratoren (G) an einem Turmbauwerk (1) sich gegenläufig drehen und/oder dass die jeweils benachbarten Windgeneratoren (G) zwischen zwei Turmbauwerken (1) sich gegenläufig drehen.

12. Raumwindpark nach einem der oberen Ansprüche, **dadurch gekennzeichnet, dass** ein oder mehrere Global-Controller (80) Zustandsdaten des baulichen Gefüges, bestehend aus Turmbauwerken (1) und Spanngliedern (14), die in Fundamenten (8 und 6) verankert sind, mittels Sensoren (60, 68, 84 und 86) aufnehmen und in einem Berechnungsverfahren zur Vermeidung von Lastspitzen und/oder Vermeidung von Resonanzen den Betriebszustand der Windgeneratoren entsprechend steuern.

13. Raumwindpark nach einem der oberen Ansprüche, **dadurch gekennzeichnet, dass** ein Lokal-Controller (82.L) auch Zustandsdaten der Sensoren (60, 68, 84 und 86) aus dem Nahfeld des Bauwerkes rund um den jeweiligen Lokal-Controller (82.L) verarbeiten kann.

14. Verfahren zum Steuern der Last an den abgespannten Turmbauwerken (1) eines Raumwindparks nach einem der vorhergehenden Ansprüchen, wobei ein oder mehrere Global-Controller (80) Zustandsdaten des baulichen Gefüges, bestehend aus Turmbauwerken (1) und Spanngliedern (14), die in Fundamenten (8 und 6) verankert sind, mittels Sensoren (60, 68, 84 und 86) aufnehmen und in einem Berechnungsverfahren zur Vermeidung von Lastspitzen und/oder Vermeidung von Resonanzen den Betriebszustand der Windgeneratoren entsprechend steuern, wobei die durch die Rotorblätter angeregten Schwingungen p und 3p der einzelnen Windgeneratoren (G) durch unterschiedliche Drehzahlen der einzelnen Windgeneratoren (G) so geregelt werden, dass Lastspitzen und unvorteilhafte Resonanzen zwischen den einzelnen Windgeneratoren (G) untereinander an demselben Turmbauwerk (1) sowie an den benachbarten Turmbauwerken (1), mit denen sie über die Spannglieder (14) verbunden sind, vermieden werden.

15. Verfahren nach Anspruch 14, **dadurch gekennzeichnet, dass** der Global-Controller (80) die Windgeneratoren (G) im Windpark in einem Verfahren so ansteuert, so dass die Betriebszustände sich chaotisch oder quasi-chaotisch voneinander unterscheiden.

## Claims

1. A space wind farm, consisting of a plurality of tower structures (1) which carry a plurality of wind generators (G) arranged one above the other and which are laterally braced by tendons (14) which run laterally away from the tower structure (1), **characterized in that**
the tendons (14) extending between the tower structures (1) are each held on the ground side in the tower foot region (F) of the neighboring tower structure.

2. The space wind farm according to claim 1, **characterized in that** preferably three wind generators (G1 to G3) with their own associated wind blades are arranged one above the other.

3. The space wind farm according to any of the above claims, **characterized in that** the tendons (14) are fastened to the tower structure (1) by one end in the upper region of the tower structure (1) between the second uppermost wind generator (G2) and the uppermost wind generator (G3).

4. The space wind farm according to any of the above claims, **characterized in that** the tendons (14) are fastened by one end in the tower foot region (F) of the tower structure (1), wherein the tower foot region (F) may also contain a support structure for offshore construction, and/or **in that** the tendons (14) are doubled in each tensioning direction at least between two tower structures (1).

5. The space wind farm according to any of the above claims, **characterized in that** additional securing tendons (16) are fastened between the second uppermost wind generator (G2) and the uppermost wind generator (G3) to respectively neighboring tower structures (1).

6. The space wind farm according to any of the above claims, **characterized in that** damping elements (90) and (92) are mounted either jointly or individually between the wind generator (G) and the tower structure (1), in particular **in that** connecting elements (94) and (96) are mounted between the wind generator (G) and the tower structure (1), by which the wind generator (G) is mounted to be rotatable about the tower structure (1).

7. The space wind farm according to claim 6, **characterized in that** connecting elements (94) and (96) and the damping elements (90) and (92) are part of the machine frame of the wind generator (G).

8. The space wind farm according to any of the above claims, **characterized in that** the tower section above the region of the anchoring point (12) is produced in a more lightweight construction than the one below.

9. The space wind farm according to any of the above claims, **characterized in that** the tower structure (1) includes reinforcements in the tower wall in the region of the fastening device for the lifting means.

10. The space wind farm according to any of the above claims, **characterized in that** in the edge region of the space wind farm the outer tendons divide into two diverging tendons (14') and (14") and are fastened to the ground in anchoring foundations (6') and (6").

11. The space wind farm according to any of the above claims, **characterized in that** the respectively neighboring wind generators (G) on a tower structure (1) rotate in opposite directions and/or **in that** the respectively neighboring wind generators (G) between two tower structures (1) rotate in opposite directions.

12. The space wind farm according to any of the above claims, **characterized in that** one or more global controllers (80) receive status data of the structural arrangement, consisting of tower structures (1) and tendons (14), which are anchored in foundations (8 and 6), by means of sensors (60, 68, 84 and 86) and control the operating state of the wind generators correspondingly in a calculation method for avoiding load peaks and/or avoiding resonances.

13. The space wind farm according to any of the above claims, **characterized in that** a local controller (82.L) can also process status data of the sensors (60, 68, 84 and 86) from the near field of the structure around the respective local controller (82. L).

14. A method of controlling the load on the guyed tower structures (1) of a space wind farm according to any of the preceding claims, wherein one or more global controllers (80) receive status data of the structural arrangement, consisting of tower structures (1) and tendons (14), which are anchored in foundations (8 and 6), by means of sensors (60, 68, 84 and 86) and control the operating state of the wind generators correspondingly in a calculation method for avoiding load peaks and/or avoiding resonances, wherein the oscillations p and 3p of the individual wind generators (G) excited by the rotor blades are regulated by different rotational speeds of the individual wind generators (G) in such a way that load peaks and unfavorable resonances between the individual wind generators (G) among each other on the same tower structure (1) as well as on the neighboring tower structures (1) to which they are connected by means of the tendons (14), are avoided.

15. The method according to claim 14, **characterized in that** the global controller (80) controls the wind generators (G) in the wind farm in a method such that the operating states differ from one another chaotically or quasi-chaotically.

## Revendications

1. Parc éolien spatial composé d'une pluralité de constructions en tour (1) qui portent une pluralité de génératrices éoliennes (G) agencées les unes au-dessus des autres et qui enserrées latéralement par des tendeurs (14) guidés latéralement en éloignement de la construction en tour (1), **caractérisé en ce que**
les tendeurs (14) qui s'étendent entre les constructions en tour (1) sont chacun supportés du côté sol dans la zone (F) du pied de la tour de la construction en tour voisine.

2. Parc éolien spatial selon la revendication 1, **caractérisé en ce que** de préférence trois génératrices éoliennes (G1 à G3) sont agencées les unes au-dessus des autres avec leurs propres pales de vent associées.

3. Parc éolien spatial selon l'une des revendications précédentes, **caractérisé en ce que** les tendeurs (14) sont fixés à la construction en tour (1) par une extrémité dans la zone supérieure de la construction en tour (1) entre la deuxième génératrice éolienne (G2) depuis le haut et la génératrice éolienne la plus haute (G3).

4. Parc éolien spatial selon l'une des revendications précédentes, **caractérisé en ce que** les tendeurs (14) sont fixés par une extrémité dans la zone (F) du pied de la tour de la construction en tour (1), la zone (F) du pied de la tour pouvant également contenir une structure de fondation pour des constructions en mer, et/ou **en ce que** les tendeurs (14) sont réalisés en double dans chaque sens de serrage au moins entre deux constructions en tour (1).

5. Parc éolien spatial selon l'une des revendications précédentes, **caractérisé en ce que** des tendeurs de sécurité (16) supplémentaires sont fixés sur des constructions en tour (1) respectivement voisines entre la deuxième génératrice éolienne (G2) depuis le haut et la génératrice éolienne la plus haute (G3).

6. Parc éolien spatial selon l'une des revendications précédentes, **caractérisé en ce que** des éléments d'amortissement (90) et (92) sont agencés, ensemble ou individuellement, entre la génératrice éolienne (G) et la construction en tour (1), en particulier **en ce que** des éléments de raccordement (94) et (96) sont agencés entre la génératrice éolienne (G) et la construction en tour (1), au moyen desquels la génératrice éolienne (G) est montée mobile en rotation autour de la construction en tour (1).

7. Parc éolien spatial selon la revendication 6, **caractérisé en ce que** des éléments de raccordement (94) et (96) et les éléments d'amortissement (90) et (92) font partie du cadre de machine de la génératrice éolienne (G).

8. Parc éolien spatial selon l'une des revendications précédentes, **caractérisé en ce que** la partie de tour située au-dessus de la zone du point d'haubanage (12) est réalisée selon une construction plus légère que celle située en-dessous.

9. Parc éolien spatial selon l'une des revendications précédentes, **caractérisé en ce que** la construction en tour (1) présente dans la zone du dispositif de fixation pour le moyen de soulèvement des renforcements dans la paroi de la tour.

10. Parc éolien spatial selon l'une des revendications précédentes, **caractérisé en ce que** dans la zone de bordure du parc éolien spatial, les tendeurs extérieurs sont divisés en deux tendeurs divergents (14') et (14") et sont fixés au sol dans des fondations d'haubanage (6') et (6").

11. Parc éolien spatial selon l'une des revendications précédentes, **caractérisé en ce que** les génératrices éoliennes (G) respectivement voisines sur une construction en tour (1) tournent dans des sens opposés et/ou **en ce que** les génératrices éoliennes (G) respectivement voisines entre deux constructions en tour (1) tournent dans des sens opposés.

12. Parc éolien spatial selon l'une des revendications précédentes, **caractérisé en ce qu'**un ou plusieurs contrôleurs globaux (80) enregistrent, au moyen de capteurs (60, 68, 84 et 86), des données d'état de l'ensemble structurel qui est composé de constructions en tour (1) et de tendeurs (14) ancrés dans des fondations (8 et 6), et commandent de manière appropriée l'état de fonctionnement des génératrices éoliennes dans un procédé de calcul visant à éviter les pics de charge et/ou à éviter les résonances.

13. Parc éolien spatial selon l'une des revendications précédentes, **caractérisé en ce qu'**un contrôleur local (82.L) peut également traiter des données d'état des capteurs (60, 68, 84 et 86) provenant du champ proche de la construction autour du contrôleur local (82.L) respectif.

14. Procédé de commande de la charge sur les constructions en tour haubanées (1) d'un parc éolien spatial selon l'une des revendications précédentes, un ou plusieurs contrôleurs globaux (80) enregistrant, au moyen de capteurs (60, 68, 84 et 86), des données d'état de l'ensemble structurel qui est composé de constructions en tour (1) et de tendeurs (14) ancrés dans des fondations (8 et 6), et commandant de manière appropriée l'état de fonctionnement des génératrices éoliennes dans un procédé de calcul visant à éviter les pics de charge et/ou à éviter les résonances, les oscillations p et 3p des génératrices éoliennes (G) individuelles excitées par les pales du rotor étant régulées par des vitesses de rotation différentes des génératrices éoliennes (G) individuelles de manière à éviter les pics de charge et les résonances défavorables entre les génératrices éoliennes (G) individuelles entre elles sur la même construction en tour (1) ainsi que sur les constructions en tour voisines (1) auxquelles elles sont reliées par les tendeurs (14).

15. Procédé selon la revendication 14, **caractérisé en ce que** le contrôleur global (80) commande les génératrices éoliennes (G) du parc éolien selon un procédé tel que les états de fonctionnement diffèrent les uns des autres de manière chaotique ou quasi-chaotique.
